# EUROPEAN PATENT APPLICATION

(11) **EP 1 264 907 A1**
(43) Date of publication of application: **11.12.2002**
(21) Application number: 02076891.7
(22) Date of filing: 15.05.2002
(51) Int. Cl.: C22C 11/06, H01M 4/68, H01M 4/72

(54) **Silver-barium lead alloy for lead-acid battery grids**

(30) Priority: 04.06.2001 US 872875
(71) Applicant: Enertec Comercial, S.de R.L. de C.V., Monterrey, -Nuevo Leon C.P. 64740 (MX)
(72) Inventor: Vazquez del Mercado, Luis Francisco, Monterrey, Nuevo C.P. 64740 (MX); Silva-Galvan, Luis David, Monterrey, Nuevo C.P. 64740 (MX)
(74) Representative: Davila Baz, Angel

(57) **Abstract**

A lead alloy for lead acid-battery grids which essentially consists of about 0.05-0.07 wt % calcium; about 0.09-1.3 wt % tin; about 0.006-0.010 %silver; about 0.0100-0.0170 wt% barium and about 0.015-0.025 wt% aluminum with the balance lead. This lead alloy allows the improvement of the age hardening step, by eliminating the high temperature treatment process required for silver alloys in the manufacturing of lead-acid batteries. By using this lead alloy, a longer service life of the lead-acid batteries are also obtained by increasing the corrosion resistance and the mechanical strength of battery grids manufactured by the book molding process. Additionally, the reduced silver level used dramatically mitigates the problem of silver elimination from the stream of recycled lead in the secondary production of this metal.

## Description

### BACKGROUND OF THE INVENTION

### 1. Field of the Invention

This invention relates generally to lead-acid batteries, and more specifically, to a silver- barium lead alloy for grids.

### 2. Description of Related Art

One of the most critical components in a lead-acid battery is the grid. This is used to support the positive and negative materials, and also to provide a conductive path for the current during the charge and discharge of the cell. Lead-acid battery manufacturers have available a variety of techniques for forming battery grids. Battery grids are typically made by adding the alloying constituents in the prescribed amounts to the molten lead and then mixing until the mass is homogeneous. Latter on, the lead-acid battery grids are produced by gravity casting or are continuously formed by expanded metal fabrication techniques . In the most common gravity casting method, the molten alloy is fed into what is named a book mold and is then allowed to solidify. In the expanded method, a rolled or wrought alloy strip or a cast strip is slit and expanded using reciprocating dies and then cut into the desired width and height dimensions to form the grid with a lug.

Great attention over the years has been given to the type of alloys used for manufacturing positive and negative grids. The selection of appropriate levels of elements for the battery grids involves considerations of grid-production capability, economic feasibility, and the metallurgical and electrochemical properties of the resulting alloys. Lead alloys must provide such properties as stiffness, strength, grain refinement, hardness, corrosion resistance, processability and conductivity. From several years of experience all around the world, it is well known that the ultimate life of a lead-acid battery is largely determined by the positive grids. According to Taylor et al (U.S. Patent 6,117,594), several factors contribute to making the positive grid the life limiting component of the battery: 1) highly oxidizing potential created by the presence of the positive active material and sulfuric acid, 2) high temperature accelerating the grid oxidation due to the battery being enclosed in a confined space in close proximity to the ICE engine, 3) relatively poor conductivity of the active material placing most of the current carrying burden on the Pb grid member, and 4) relatively poor match of the crystal structure of the active material compared to the Pb grid to which it must be in electrical contact.

The main efforts during last years have been on the quaternary systems lead-calcium-tin-silver for positive lead-acid battery grids.

Rao et al in the U.S. Patent 5,298,350, claimed alloys containing 0.025-0.06 wt. % calcium, 0.3-0.7 wt. % tin and 0.015-0.045 wt. % silver. Rao et al in the U.S. patent 5,434,025 disclosed a direct cast alloy strip wherein the alloy consists essentially of lead, from about 0.02 to 0.05 % calcium, from about 0.3 to about 0.5% tin, and from about 0.02 to 0.05% silver, as well as related alloys utilizing calcium and strontium or strontium in place of calcium. Rao et al, in the U.S. patent 5,691,087 claimed positive plates made from an alloy consisting essentially of lead, from about 0.025% to about 0.06 % calcium, from about 0.9 % tin, and from about 0.015 % to about 0.045% silver. Rao et al in the U.S. patents 5,874,186 and 6,180,286 claimed several alloys based upon the type of application and the plate fabrication method utilized. Starting, lighting and ignition battery grids being directly cast and having calcium present in an amount of 0.03% to 0.05%, tin in an amount of 0.65% to 1.25%, and silver in an amount of from 0.018 to 0.030, and the grids used in sealed, lead-acid cells comprising, when made by gravity casting, from about 0.035% to 0.055% calcium, 0.95 to 1.45 tin, and 0.018% to 0.030 silver, and, when made by continuous strip casting, calcium in the range from 0.017% to 0.030%.

Taylor et al in U.S. patent 6,117,594 claimed an alloy with superior mechanical properties and improved corrosion resistance, which leads to a superior battery life. In a preferred manner, the alloy includes lead, tin in the range of about 0.8% to about 1.17%, and silver in the range of grater than 0 to about 0. 015%. It is one of the important discoveries of the Taylor work that by using tin at a relatively high level, as well as a high ratio of tin to calcium, the use of silver is not a major factor in such features as rapid hardening for manufacturability, hardness and low corrosion rate for extended service life. According to Taylor, full hardness by full use of the calcium atoms diluted in the crystal lattice can be achieved only if there are enough tin atoms around. The less calcium there is, the more tin is needed to get the full hardening action.

Another result from Taylor was that alloys in the "low calcium-high tin " area shows, in fact, a slight increase in corrosion rate with increasing silver content. These test results show that a reduced silver content (50-200 ppm) is favorable in terms of corrosion for low calcium high tin alloys. As long as the tin to calcium ratio is above the critical limit to get full hardness, the choice of whether or not adding silver is driven only by the need to get some additional creep resistance (silver at grain boundaries).

Anderson et al in the U.S. patent 5,834,141 disclosed lead alloys for book mold casting and for expanded metal process. The battery grid formed by a book mold process consisting essentially of, by percent weight: calcium 0.035 to 0.055, tin 1.2 to 1.55, silver 0.025 to 0.035 and aluminum 0.005. The battery grid formed by an expanded metal process consisting essentially of, by percent weight: calcium 0.045 to 0.085, tin 1.2 -1.55, silver 0.002 to 0.0049.

Bauer et al, in the U.S. patent 6,210,837 claimed electrode grids with an average grain diameter between 200 and 600 microns. In the alloy used by Bauer, the aluminum content is in the rage of 0.014% to 0.02%, the calcium content is between 0.04 and 0.06%, the tin content is between 0.5 to 1.0% and the silver content is between 0.005 and 0.06%.

One important problem to solve on these Pb-Ca-Sn-Ag-Al alloys, is that the casted grids made from these alloys require an age hardening treatment obove the room temperature to improve their hardness and strength required for the processing steps of the lead-acid battery manufacturing. The hardening rate and maximum hardness are both important for a grid alloy. Increasing the age hardening rate of an alloy facilitates high rate, high volume battery production by shortening the time required for the alloy to achieve acceptable strength for processing. Increasing the maximum hardness without sacrificing corrosion resistance tends toward improving overall battery quality. The manufacturers must therefore detect when the material is strong enough to sustain stresses of the first manufacturing stages of pasting and curing. In fact, the manufacturing of grids for batteries requires a particular attention during the first period of pasting. During this operation the grid has to be rigid enough so it will not deform under the leady oxide paste application pressure which will cover the grid. It is well known that at room temperature, the lead-calcium-tin- aluminum alloys family develops age hardening, however, the kinetics of this process is very slow. The age hardening of these alloys at room temperature take some days leading to the temporary storage of grids to let the hardness phenomenon the time to develop. The use of lead alloys to allow faster hardness kinetics and the thermal activation should reduce the time of grid storage. One important problem resulted from addition of silver to the Pb/Ca/Sn/Al alloy, has been the requirement of higher temperature age hardening treatment (80 to 100 °C) to increase the hardness required by the grids. In practice, the age hardening for Pb-Ca-Sn-Al-Ag takes approximately 8 hours and requires higher capital and operation costs because the additional equipment and energy required. Other problem of silver content in lead alloys is that this element increases the tendency to hot cracking in Pb-Ca-Sn-Al-Ag alloys because the silver content increases the freezing range of the alloys.

Another problem of the high silver lead alloys is described as follows: The use of silver as an alloy to improve corrosion resistance and performance of positive grids has been known since the early 1990s. Since this date, there has been a continual increase in the usage of silver by battery manufacturers in producing positive grids. Waggener in his study "Silver in lead issue" reported that in 1995, approximately 23 percent of the lead-acid automotive batteries being made in the USA were being produced with silver alloyed positive grids (typically 350 ppm of silver). During 1999 the manufacturing of these higher silver alloyed batteries had increased to approximately 40% of all automotive batteries produced. This increase in silver use as an alloying element for lead-acid batteries has resulted in silver content of recycled soft lead dramatically increasing from less than 20 ppm in early 1990s to an average of about 35 ppm today. It is expected to continue to rise to much higher levels because it is reported by most within the secondary lead industry that the industry is not able to be remove silver economically from recycled lead. Waggener found that secondary soft lead is projected to average 50 ppm silver in the year 2002, and in a worse case scenario it is projected to possible average as high as 100 ppm as early as the year 2008. The majority of existing refined lead specifications call for a silver concentration limitation because hot-cracks and hot-tear defects during the lead alloy casting. Some current battery producers and sellers to consumers of batteries have marketed the use of silver in their batteries and they appear to be reluctant to switch to other alloys. However, there exists feasible alternatives to using less silver in positive grids and the widespread use of silver could be greatly reduced if the industry chose to do so.

One important effort on this direction has been disclosed in the patents WO97/30183 and WO 99/05732. In the lead alloy claimed by L. Albert et al in the WO 97/30183 patent, the calcium content is between 0.05 and 0.12%, the tin content is lower than 3%, the aluminum content is in the range of 0.002 to 0.04%, the barium content is lower than 0.02%, and it is important to remember that the silver content claimed in this patent was lower than 0.005%.

In the lead alloy claimed by B.Madelin et al in the WO 99/05732 patent, the calcium content is between 0.04 and 0.12%, the tin content is lower than 3%, the aluminum content is in the range of 0.001 to 0.035%, and the barium content is in the range of 0.02 and 0.1%.

Field testing consisting in evaluations of batteries made out of the alloy claimed in patent WO 97/30183 has shown several drawbacks. The most common failure mode being cell shortening due to positive grid growth after some rather limited usage, causing this electrode to touch the bottom of the strap that joins together the plates which form the negative electrode of said cells.

Manufacturability testing consisting in evaluations of battery grids made by bookmolding out of the alloy claimed in same patent has shown several drawbacks. The most pervasive being hot tears beginning to appear in the grids at above 0.017% of barium content. At higher barium levels this problem becomes more acute.

### BRIEF SUMMARY OF THE INVENTION

The objectives of the present invention are:
1.) to provide an improved silver-barium lead alloy to be used to make lead-acid battery positive grids that improve the aging process at room temperature required to reach the hardness and strength needed during pasting, curing, and subsequent processing of said battery grids. This new alloy avoids the high temperature treatment required to speed up the hardening process of the Pb-Ca-Sn-Al-Ag alloys.
2.) to provide good creep corrosion resistance characteristics to the battery grids manufactured with said alloy, since internal electrical shorting due to grid growth is one of the most frequent modes of failure in the cells of these batteries.
3.) to provide a lead alloy with a silver content which may be recycled without impacting the stream of recycled lead with ever growing, and difficult to remove silver content levels.

Alloy selection according to this invention provides a range of calcium, tin, silver, aluminum and barium content which gives an optimum balance between the need to get hardening and strength by calcium and barium based precipitation reactions, and the creep corrosion resistance provided by the silver content of the alloy. The finer microstructure produced during the solidification of the alloy, leads to reduced intergranular penetrating corrosion and improved creep resistance.

In the case of a positive grid, this objective is achieved by an alloy containing about 0.05-0.07 wt % calcium; about 0.9-1.3 wt % tin; about 0.006-0.010% silver; about 0.0100-0.0170 wt% barium and about 0.015-0.025 wt% aluminum with the balance being lead. Increased strength is attributable to the presence of barium atoms which lead the formation of different precipitates that block the crystals growing during solidification. On the other hand, batteries made according to the present invention suffer less degradation over the useful life of a battery in comparison to the degradation experienced by batteries using positive grids manufactured from Pb-Ca-Sn-Al-Ba alloys with no silver.

A further object of this invention is to provide a lead alloy with a silver content leading to good castability, avoiding hot cracks and hot tears.

### BRIEF DESCRIPTION OF THE SEVERAL VIEWS OF THE DRAWINGS

Fig. 1 is a graph of hardness test results performed at room temperature on battery grids manufactured from three different alloys, plotting the degree of hardness versus time.

Fig. 2 is a graph of overcharge corrosion test results performed during seven days at 60 °C on battery grids manufactured from three different alloys, plotting the grid weight losses per unit of area of the tested grid versus the type of alloy.

Fig. 3 is a graph of corrosion evaluation using impedance measurements performed on battery grids manufactured from tree different alloys, plotting the ohmic drop across grids vs. time.

### DETAILED DESCRIPTION OF THE INVENTION

The alloys of the present invention are produced by adding the alloying constituents in the prescribed amounts to the molten lead and then mixing until the mass is homogeneous. Latter on, the lead-acid battery grids are produced by gravity casting machines using book molds.

Great interest, as mentioned early in the present description, in Pb-Ca-Sn-Ag-Al lead alloys as positive grid alloys has been developed. This alloy is a complex precipitation-hardening alloy deriving high mechanical strength , when age hardening at temperatures between 80 and 100 °C, and corrosion resistance attributes due to a uniform dispersion of very fine intermetallic precipitates in a lead rich matrix. From an intensive research work, undertaken in our testing laboratories and in our pilot plant, it has been found that the grids and the batteries assembled with these grids can be further improved by the addition of a new alloying element to the Pb-Ca-Sn-Ag-Al alloy. One aspect of the present invention is oriented towards the improvements of barium additions to Pb-Ca-Sn-Ag-Al alloy that lead to modifications of the microstructure of this alloy during solidification in order to eliminate the age hardening treatment at temperatures higher than the room temperature required by conventional Pb-Ca-Sn-Ag-Al casting alloy before pasting and curing, while still retaining the creep corrosion resistance provided by the silver content of the alloy.

Alloy selection according to this invention provides a range of calcium, tin, silver, aluminum and barium content which gives an optimum balance between the need to get hardening and strength by calcium and barium based precipitation reactions and to reduce the corrosion of grids leading to a finer microstructure during the solidification of the alloy.

The Barium content of this lead based alloy should be maintained in the range of 0.0100 to 0.0170 wt %. This range has been found, in conjunction with a calcium content of about 0.05-0.07 wt %, to allow adequate mechanical properties while lowering the rate of lead matrix recrystallization and eliminating the high temperature age hardening required for lead-silver alloys.

Due to the problems associated with the increased silver content in recycled lead, as described in the background of the invention, a further object of the invention is to provide a lead alloy which may be recycled without impacting the stream of recycled lead with ever growing, and difficult to remove silver content levels. In fact, because silver is difficult to eliminate from lead alloys and because of castability problems associated to silver high contents, the silver content on lead alloys must be limited. A silver content of about 0.006-0.010 wt % and a tin content of about 0.9-1.3 wt %, avoid the hot-cracks and hot-tear defects during the lead alloy casting and provides high temperature corrosion resistance while reducing the creep-induced deformation.

In order to prevent calcium and barium losses, aluminum additions from about 0.015 to 0.025 wt % is used in the alloy of the present invention.

The hardening rate and maximum hardness are both important indicators of the strength for a grid alloy. In addition to these two properties, automotive battery life is also impacted by corrosion of the grid structure of the positive plate. Both conditions, strengthening and corrosion resistance of lead-acid batteries can be simulated by laboratory tests and by field tests with batteries working in real conditions to evaluate the potential of positive grids alloys to extend the service life of batteries. Reasonable correlation between laboratory tests and follow up studies of battery life has been demonstrated.

In order to evaluate the optimum silver and barium levels for manufacturability and extending life of the lead-acid batteries, a set of experiments were undertaken. To illustrate the advantages over the previous art, in the following paragraphs different experiments and tests are described.

### Hardening tests

Positive grids were cast in book molds using the conventional gravity casting method. The hardening process progress was evaluated for different alloys through their hardening rate at room temperatures. Samples were taken at different times after the casting of the grids. In this test, the rate at which the alloy hardness is performed by measuring hardness as a function of time. Vickers hardness measurements were carried out on an Instron Wilson Tukon 2100 hardness tester under a load of 200 gr. during 15 seconds. Points of measurement were distributed to obtain a mean sample hardness.

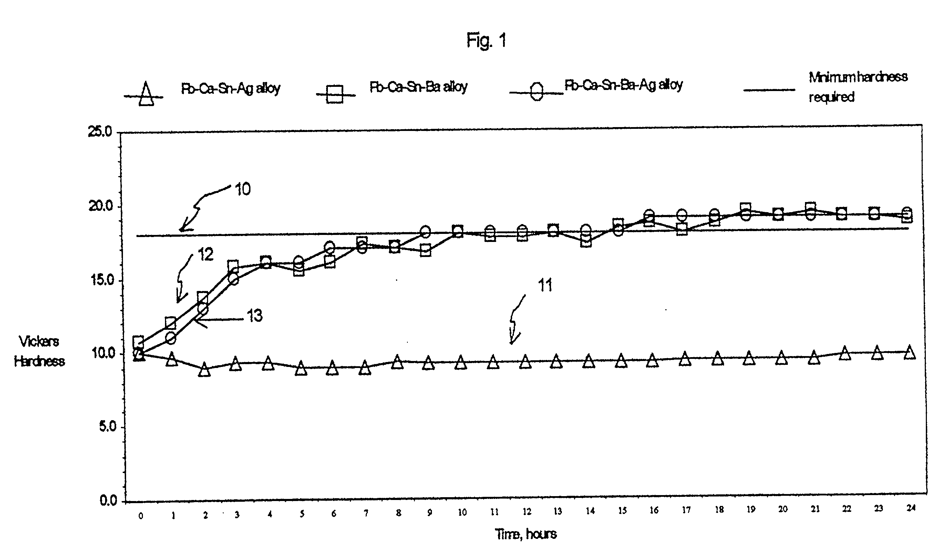

Pursuant to the invention and referring to the Fig. 1, age hardening of battery grids casted by the book molding at room temperature from different alloys are shown. On this figure, the minimum recommended Vickers hardness for a good handling of the grids during pasting and curing is indicated by line 10. The value of line 10 is a Vickers hardness of 18.

In Fig. 1, the line 11 represents the age hardening of a conventional Pb-Ca-Sn-Al-Ag alloy ( 0.045% Ca, 0.92% Sn, 0.0125%Ag, 0.0130%Al) at room temperature. As it is shown by Fig. 1, the conventional Pb-Ca-Sn-Al-Ag alloy at room temperature only reaches Vickers hardness values below 10 after 24 hours of aging. Line 12 represents the age hardening of a Pb-Ca-Sn-Al-Ba alloy ( 0.051% Ca, % 1.03Sn, 0.019%AI, 0.016%Ba ), and line 13, represents the age hardening of a Pb-Ca-Sn-Al-Ag-Ba alloy ( 0.052% Ca, 1.03% Sn, 0.0070%Ag , 0.017%AI, 0.016%Ba ). Both alloys show a continued hardening increase, and reach the minimum hardness requirement after only 10 hours in storage at ambient temperature. Once they pass said threshold, they level out and stay well within the range needed for good battery manufacturing.

So, from Fig. 1 we can conclude that grids made from the Pb-Ca-Sn-Al-Ba and Pb-Ca-Sn-Al-Ag-Ba alloys, according to the present invention became harder sooner than those made from conventional Pb-Ca-Sn-Al-Ag. One important finding from these results is that the grids made with alloys according to the present invention do not require age hardening at temperatures higher than the room temperature as is usually for conventional Pb-Ca-Sn-Al-Ag alloys.

### Corrosion tests

Corrosion testing was carried out in a comparative fashion procedure, using several techniques whose results have shown the advantages provided by the proposed alloy versus other alloys currently used in the lead-acid battery industry. The evaluations were made on both: test grids and batteries made out of said grids.

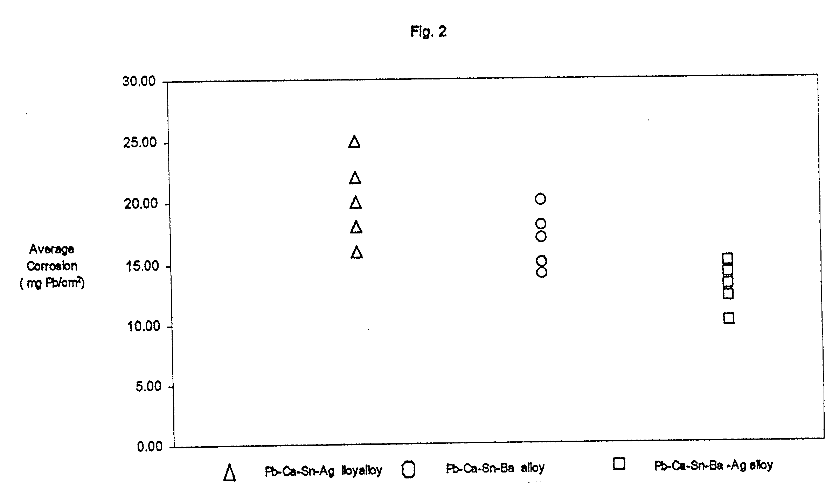

Overcharge corrosion resistance. In this test, the grid to be evaluated is assembled into an electrochemical cell that uses a 1.270 specific gravity sulfuric acid at 60 degrees centigrade, as electrolyte. Corrosion is measured at constant potential of 1.350V against a reference electrode of mercury/mercuric sulfate. The test reproduces the corrosion created on the grids by positive voltage when the battery is being charged. The results are expressed as grid weight losses per unit of area of the tested grid. The results of overcharge corrosion resistance for tree different alloys are shown in Fig 2., plotting the grid weight losses per unit of area of the tested grid versus the type of alloy. The alloys tested were: Pb-Ca-Sn-Al-Ag alloy ( 0.045% Ca, 0.92% Sn, 0.0125%Ag, 0.0130%AI), Pb-Ca-Sn-Al-Ba alloy ( 0.051% Ca, % 1.03Sn, 0.019%AI, 0.013%Ba ) and Pb-Ca-Sn-Al-Ag-Ba alloy ( 0.052% Ca, 1.03% Sn, 0.0095%Ag, 0.017%AI, 0.016%Ba ), according to the present invention. Evidence from these results has shown that the corrosion of battery grids is reduced, in comparison to Pb-Ca-Sn-Al-Ag and Pb-Ca-Sn-Al-Ba alloys, when the grids are made with Pb-Ca-Sn-Al-Ag-Ba alloys according to the present invention.

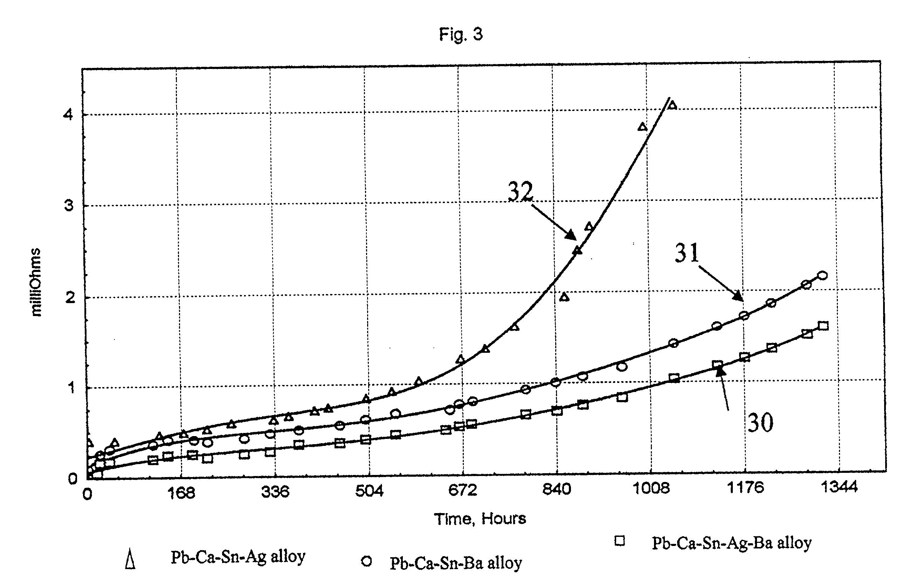

Corrosion evaluation using impedance measurements. In this test, the grid of the alloy to be evaluated is assembled into an electrochemical cell, which uses a 1.270 specific gravity sulfuric acid electrolyte, and consists of the grid itself working against a counter electrode and a reference electrode. Those three electrodes are connected to a potentiostat, and a 1.350V potential is maintained between the grid and the reference electrode throughout the test. The Ohmic drop is evaluated using an impedance analyzer, and readings are averaged during 5 minute intervals. The readouts are taken periodically and are plotted against time. The end of the test is shown by a sharp increase in the Ohms readouts. The length of time it takes to reach this point is directly related to the corrosion rate. The longer it takes to the sample to get there, the better its corrosion resistance ability is. Performance of grids made out of different alloys can be quantitatively compared with this method. The alloys tested were: Pb-Ca-Sn-Al-Ag alloy ( 0.045% Ca, 0.92% Sn, 0.0125%Ag, 0.0130%Al) represented by line 32 of Fig. 3; Pb-Ca-Sn-Al-Ba alloy (0.051% Ca, % 1.03Sn, 0.019%AI, 0.013%Ba ) represented by line 31 of Fig. 3 and Pb-Ca-Sn-Al-Ag-Ba alloy ( 0.052% Ca, 1.03% Sn, 0.0095%Ag, 0.017%AI, 0.016%Ba ) represented by line 30 of Fig. 3, according to the present invention. Evidence from results shown in Fig 3 has confirmed the overcharge corrosion resistance results presented in Fig. 2 of the present application. The corrosion of battery grids is reduced, in comparison to Pb-Ca-Sn-Al-Ag and Pb-Ca-Sn-Al-Ba alloys, when the grids are made with Pb-Ca-Sn-Al-Ag-Ba alloys according to the present invention.

### Field tests

Batteries assembled with Pb-Ca-Sn-Al-Ba (0.051 %Ca, 1.03%Sn, 0.019 %AI, 0.013%Ba) alloy grids were mounted in fleet of 30 taxis in order to perform a real life performance evaluation of said alloy. Taxis provide an acceleration factor for rapid evaluation of the alloy. Another fleet of 30 taxis was fitted with batteries assembled with the standard Pb-Ca-Sn-Al-Ag (0.045%Ca, 0.92% Sn, 0.0125%Ag, 0.0130%AI) alloy commonly utilized in the products of the applicant, which does not contain barium. A third fleet of 30 taxis was fitted with batteries assembled with Pb-Ca-Sn-Al-Ag-Ba (0.052%Ca,1.03%Sn, 0.0095%Ag, 0.017%AI, 0.0160%Ba) alloy grids to evaluate the performance of lead alloys containing both silver and barium. The batteries of the three fleets were maintained in service for about 15 months and were subsequently analyzed in the laboratory having shown a significant difference in corrosion level. 55 % of batteries assembled with Pb-Ca-Sn-Al-Ba alloy grids failed during this period. During the same period, 41 % of the batteries assembled with Pb-Ca-Sn-Al-Ag-Ba alloy and 48% of the batteries assembled with Pb-Ca-Sn-Al-Ag alloy failed. The most common failure mode of the batteries in these field tests was due to grid growth. The grid growth which is termed creep corrosion leads to electrical shorting of the cell elements, when the grid of the positive plates raises and reaches the underneath of the strap of the negative plates causing an internal electrical short in the battery. The higher under the hood temperatures of operation of modern automobiles only made this problem worse.

According to the present invention, the chemical composition of the positive grids consists essentially of about 0.05-0.07 wt % calcium; about 0.09-1.3 wt % tin; about 0.006-0.010 %silver; about 0.0100-0.0170 wt % barium and about 0.015-0.025 wt % aluminum with the balance lead

The data of the previously described tests supports the view that batteries made with positive grids using the alloy of the present invention have improved hardening performance with respect to the silver without barium alloy, and improved corrosion performance with respect to the barium without silver alloy. The invented alloy delivers the best of the two performance parameters making possible not only to achieve better manufacturability for automobile batteries through a faster hardening alloy, but also to produce a battery which suffers less degradation over its useful life.

Additionally, the reduced silver level used dramatically mitigates the problem of silver elimination from the stream of recycled lead in the secondary production of this metal.

## Claims

1. A lead alloy for lead acid-battery grids, comprising about 0.05-0.07 %wt calcium; about 0.9-1.3 wt % tin; about 0.006-0.010%wt silver; about 0.0100-0.0170 wt% barium and about 0.015-0.025 wt% aluminum with the balance being lead.

2. The lead alloy of claim 1, wherein said alloy allows the elimination of the high temperature hardening step required for silver containing alloys in the manufacturing of positive grids by the book molding process; while at the same time maintaining the excellent corrosion creep resistance provided by their silver and barium content.

3. A lead-acid battery comprising a container with a plurality of cells and an electrolyte contained in the cells, each cell comprising a plurality of positive and negative grids, said positive grids comprising about 0.05-0.07 wt % calcium; about 0.09-1.3 wt % tin; about 0.0060-0.0100 %silver; about 0.0100-0.0170 wt% barium and about 0.015-.025 wt% aluminum with the balance lead.
